Europäisches Patentamt

European Patent Office

Office européen des brevets

(19)

(11) Veröffentlichungsnummer: **0 100 538**
**B1**

# (12) EUROPÄISCHE PATENTSCHRIFT

(45) Veröffentlichungstag der Patentschrift:
15.01.86

(51) Int. Cl.⁴: **C 02 F 1/46**

(21) Anmeldenummer: **83107496.8**

(22) Anmeldetag: **29.07.83**

(54) Anlage zur kontinuierlichen Aufbereitung oder Nachbehandlung von aggressivem Trink- und Brauchwasser mittels Elektrolyse.

(30) Priorität: **03.08.82 CH 4680/82**

(43) Veröffentlichungstag der Anmeldung:
**15.02.84 Patentblatt 84/7**

(45) Bekanntmachung des Hinweises auf die Patenterteilung:
**15.01.86 Patentblatt 86/3**

(84) Benannte Vertragsstaaten:
**DE GB NL SE**

(56) Entgegenhaltungen:
**FR-A-1 344 004**
**FR-A-2 134 737**
**FR-A-2 190 743**
**GB-A-1 460**
**GB-A-1 066 213**

(73) Patentinhaber: **Rickenbach, Heinrich,**
**Widmerstrasse 1, CH- 8038 Zürich (CH)**

(72) Erfinder: **Rickenbach, Heinrich, Widmerstrasse 1,**
**CH- 8038 Zürich (CH)**

(74) Vertreter: **Siebert, Rolf, Dipl.- Masch.Ing.ETH,**
**Patentanwälte R.A. Maspoli und Partner**
**Promenadengasse 18, CH- 8001 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Anlage zur Aufbereitung oder Nachbehandlung von aggressivem Trink- oder Brauchwasser mittels Elektrolyse, mit einem vom Wasser zu durchströmen bestimmten Durchlaufbecken, welches über seine Länge mehrere vertikal angeordnete, im wesentlichen über die ganze Breite des Beckens reichende Schikanen aufweist.

Der Zweck dieser Anlage besteht ausser dieser Nachbehandlung von noch aggressivem Trinkwasser in Trinkwasserversorgungsanlagen auch noch in der weiteren Reinigung des durch eine Kläranlage bereits vorgereinigten Wassers. Es handelt sich also um die Behandlung von grossen Wassermengen. Insbesondere soll eine Ausfällung der im Wasser gelösten Schwermetalle und anderer Chemikalien sowie die Elimination von Chlor und aggressiven Gasen erreicht werden, da die mechanischen Stufen von Kläranlagen oder Filtersystemen im Trinkwassersektor dazu nicht imstande sind.

Anlagen, die auf dem Prinzip der Nachbehandlung von Wasser mittels Elektrolyse arbeiten, sind zwar im Prinzip bereits bekannt. Einige sind unter dem Markennamen "Elysator" bzw. ""Ellysator" bekannt. Es handelt sich jedoch, wie auch die Anlage gemäss der britischen Patentschrift Nr. 1460 oder der französischen Patentschrift Nr. 2 134 737, um Anlagen mit geschlossenen Gefässen, oft mit Boilern, und sie dienen meist zum Schutz der Gefässwandungen und Rohrleitungen gegen Rost und übermässigen Kalkansatz. Eine andere Anlage, diejenige nach der französischen Patentschrift Nr. 1 344 004, weist zwar einen offenen Behälter auf, dient aber nicht der Trinkwasseraufbereitung, sondern der Entgiftung von Brauchwasser in der Galvanoplastik. In allen diesen Fällen sind diese Anlagen für relativ kleine Wassermengen ausgelegt. Ihr Aufbau kann daher nicht ohne weiteres auf Grossanlagen übertragen werden, weil in jeder Anlage wesentliche Elemente einzeln oder in Kombination fehlen, wie im folgenden noch gezeigt werden soll.

Demgegenüber ist die Anlage der genannten Art erfindungsgemäss dadurch gekennzeichnet, dass die Schikanen in abwechselnder Reihenfolge, auf verschiedener Höhe, unterhalb des oberen Randes des Beckens angeordnet sind, wobei die höher gelegenen Schikanen zum Boden des Beckens einen Abstand aufweisen, während die tiefer liegenden Schikanen direkt auf ihm aufliegen, dass gleichviele höher wie tiefer liegende Schikanen vorhanden sind, dass zwischen den Schikanen sowie zwischen der eine Einlassöffnung aufweisenden einen Stirnwand des Beckens und der nächstliegenden Schikane je eine Magnesium-Anodenbatterie angeordnet ist, und dass die Schikanen, die Längswand zwischen ihnen, zwischen der ersten Schikane und der genannten Stirnwand sowie diese Stirnwand eine als Kathode dienende Verkleidung aus einem Metall oder einer Metallegierung aufweisen, die im Wasser eine gegen die Anoden hin abfallende Potentialdifferenz zwischen Kathoden und Anoden ergibt.

Unter anderem ist daraus ersichtlich, dass das Durchlaufbecken immer eine gerade Anzahl von Schikanen aufweist, was zu einer ungeraden Anzahl von Kammern führt. Der Grund liegt darin, dass in der letzten Kammer der Anlage der Auslass für das Wasser tief angeordnet werden muss (der Einlass am anderen Ende wird üblicherweise hochliegend angelegt). Die tiefe Anordnung des Auslasses hat den Zweck, durch den statischen Wasserdruck eine möglichst weitgehende Austreibung der noch gelösten Gase herbeizuführen; namentlich soll der aktive Säuerstoff ausgetrieben werden.

Mit all diesen Merkmalen unterscheidet sich die erfindungsgemässe Anlage von den bereits zitierten. Diejenige nach der britischen Patentschrift Nr. 1460 weist nur Elektrodenplatten in einem mit elektrisch isolierendem Material ausgekleideten Metallkasten auf, die jeweils zu dritt eng nebeneinander angeordnet sind, wobei die mittlere Platte die Anode, die äusseren Platten die Kathoden bilden. Der Ionenaustausch ist demzufolge auf einen jeweils engen Bereich begrenzt, was zu einer geringen Leistung führt und die Verwendung in Grossanlagen ausschliesst. Auch bei der Einrichtung nach der französischen Patentschrift Nr. 2 134 737 ist die Leistung begrenzt, weil der Behälter als Zylinder aufgebaut ist, also ebensowenig wie die vorhin erwähnte britische Anlage ein Durchlaufbecken enthält und wegen der Zylinderform mit ihrem begrenzten Ausmass auch nur eine einzige Schikane enthält. Daher findet nur eine einzige Umlenkung des Wassers statt, was die vorhin erwähnte Austreibung der Gase auf ein Minimum beschränkt.

Eine Art Durchlaufbecken in Form eines offenen Behälters ist zwar in der Anlage nach der französischen Patentschrift Nr. 1 344 404 enthalten, aber die Schikanen sind alle von gleicher Höhe und lediglich seitlich zueinander versetzt angeordnet, sodass das zu behandelnde Wasser nur von einer Seite des Behälters zur anderen strömt. Für die Entgiftung des Wassers reicht dies aus, ist aber für eine Anlage, in welcher nicht nur Gase ausgetrieben, sondern auch Schwermetalle und andere Chemikalien ausgefällt werden müssen, unbrauchbar. Somit kann keine der erwähnten Anlagen für den vorgesehenen Zweck in Frage kommen.

Als baulich konstruktiv ideal hat sich bei der erfindungsgemässen Anlage ein Becken mit neun Kammern erwiesen.

Dabei können technisch günstige Normeinheiten vorgesehen sein, die bei entsprechender Kombination jeder Wasseraufbereitungsaufgabe angepasst werden können. Eine bestimmte Durchlaufleistung kann durch Parallelschalten von solchen Durchlaufbecken erreicht werden.

Ein Ausführungsbeispiel dieser Anlage ist in den beiliegenden Zeichnungen dargestellt. Es zeigen:

Fig. 1 einen Längsschnitt durch das Durchlaufbecken,

Fig. 2 eine Aufsicht auf dasselbe,

Fig. 3 einen Ausschnitt aus Fig. 1 in grösserem Maßstab und

Fig. 4 einen Anodenstab im querschnitt.

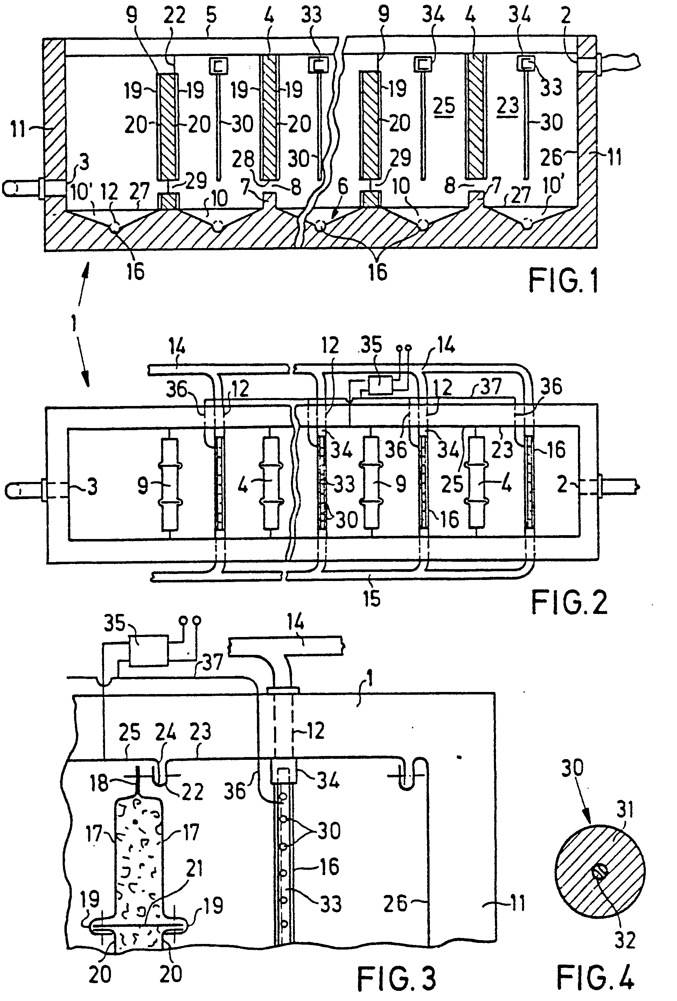

Fig. 1 zeigt als Durchlaufbecken 1 einen rechteckigen Behälter mit einer hochgelegenen Einlassöffnung 2 mit Umlenkschikane als Einlass für das zu behandelnde Wasser und einer tiefer gelegenen Auslassöffnung 3. Im Becken 1 sind in regelmässigen Abständen erste Schikanen 4 angeordnet. Sie reichen über die ganze Breite des Beckens und erstrecken sich in der Höhe gesehen, von je einem Punkt nahe dem oberen Rand 5 des Beckens 1 bis zu einem Punkt, der etwas über dem Boden 6 des Beckens liegt. Genau unter diesen ersten Schikanen sind Schwellen 7 angebracht, die nur so hoch sind, dass zwischen ihnen und den ersten Schikanen 4 je ein Durchlass 8 für das Wasser gebildet ist.

Zwischen diesen ersten Schikanen 4 sind, über die Länge des Beckens 1 betrachtet, zweite Schikanen 9 angeordnet. Sie stehen im Gegensatz zu den Schikanen 4 direkt auf dem Boden 6 auf, reichen aber dafür nicht soweit nach oben wie die ersten Schikanen 4. Somit ergeben sich, über die Länge des Beckens betrachtet, eine abwechselnde Reihenfolge von ersten und zweiten Schikanen auf verschiedener Höhe unterhalb des oberen Randes 5 des Beckens 1. Jede Schikane 9 bildet also, wie aus Fig. 1 ersichtlich, eine Art Ueberlauf des Wassers, das andererseits an den ersten Schikanen 4 an deren Unterseite vorbeiströmt. Somit ergibt sich ein ständiger auf- und absteigender Durchlauf des Wassers durch das Becken 1, was namentlich für die Abscheidung der Schwermetalle von Vorteil ist.

Der Boden 6 des Beckens 1 ist nicht eben, sondern, wie gemäss Fig. 1 in zahlreiche flache V-förmige Abschnitte 10 unterteilt. Jeder Abschnitt reicht von einer Längsseite des Beckens zur anderen, sowie in Längsrichtung von einer Schwelle 7 bis zu einer benachbarten zweiten Schikane 9. Die beiden Endabschnitte 10' werden durch die entsprechende Stirnwand 11 begrenzt. Somit steht jede Schwelle 7 bzw. jede zweite Schikane 9 auf dem höchsten Punkt zwischen zwei benachbarten Abschnitten. An der tiefsten Stelle jedes Abschnittes 10, 10' befindet sich in jeder Längswand des Beckens 1 je ein Rohr 12, 13, wobei alle Rohre 12 bzw. alle Rohre 13 an je eine Sammelleitung 14 bzw. 15 angeschlossen sind. Da sich wegen der V-förmigen Anordnung der Abschnitte 10, 10' die Ausscheidungen zum grössten Teil an der genannten tiefsten Stelle ablagern, lassen sich diese Ablagerungen unter Verwendung der Rohre 12, 13 leicht aus dem betreffenden Abschnitt herausspülen, Das Spülwasser tritt beispielsweise über die Sammelleitung 14 und die Rohre 12 in die Abschnitte ein und verlässt sie über die Rohre 13 und in die Sammelleitung 15. Durch die letztere wird das herausgespülte Sediment wieder der ersten Stufe der Kläranlage zugeführt, wo es in die Absetzbecken gelangt und dann leicht entfernt werden kann. Die Schikanen 4, 9 sind mit abgekanteten Blechtafeln aus Chromnickelstahl verkleidet. Die an den beiden seitlichen Enden jeder Schikane angeordneten Blechtafeln 17 weisen an ihrem einen Ende Flansche 18 auf, die flach aufeinander zu liegen kommen, während an den gegenüberliegenden Enden der Tafeln U-förmige Flansche 19 vorgesehen sind. Diese nehmen nicht nur einen abgebogenen Flansch der anschliessenden Blechtafel 20, sondern auch je einen Rand eines Distanzstückes 21 zwischen sich auf, worauf alles miteinander in der dargestellten Weise verschraubt wird. Die Flansche 18 werden mit einem ebenfalls U-förmigen, umgebogenen, vertikalen Rand 22 einer ersten Blechtafel 23, welche an der Längswand des Beckens 1 anliegt, und einer in diesen Rand eingreifenden weiteren, lediglich einfach abgebogenen Wand 24 einer anschliessenden Blechtafel 25 verschraubt. In Fig. 3 sind der Deutlichkeit halber grössere Abstände zwischen den einzelnen Rändern bzw. Flanschen eingezeichnet, die in Wirklichkeit nicht vorhanden sind.

Die erstgenannte Blechtafel 23 wird ausserdem nach dem Prinzip der umgebogenen Ränder mit einer die angrenzende Stirnwand 11 abdeckenden Blechtafel 26 verschraubt. Die unteren Ränder 27 aller Blechtafeln 23, 25, 26 liegen im wesentlichen auf der Höhe der Ränder der Abschnitte 10, 10'. Diese Abschnitte bilden Absetzbecken, welche strömungstechnisch gesehen ruhige Zonen darstellen; sie brauchen nicht verkleidet zu werden, da sie nur zur Ablagerung der ausgefällten Stoffe dienen.

Die Schikanen 4, 9 sind selbsttragende, hohle Blechwände, eingeteilt in vier Kammern. Unten sind die Bleche so verformt, dass die Hohlräume nach unten geschlossen sind. Nach dem Verschrauben mit den Seitenwänden des Beckens werden die Hohlräume mit Beton aufgefüllt. Während die Schikane 9, d.h. die zweite, vierte usw., so verschraubt werden, dass sie als Trennwände auf den Basissockeln zwischen den Ausscheidungsmulden aufliegen, werden die Schikanen 4, also die erste, dritte usw., soviel höher freitragend mit den Seitenwänden verschraubt, dass zwischen dem überhöhten Sockel 7 und der Trennwandunterseite 28 genügend Raum 8 für den Durchfluss des Wassers in die nächste Kammer vorhanden ist. Diese Schikanen 4 werden mit der Seitenwandauskleidung so verschraubt, dass keine weitere Abstützung dieser hochliegenden Schikanen erforderlich ist. Die Schikanen 9 erhalten je zwei bis vier verschliessbare Durchgänge 29, die nur zur Absenkung des Niveaus im Becken 1 bei der Reinigung geöffnet werden. Die zur Schliessung verwendeten Drehklappen sind ausserhalb des Bassins bedienbar.

Die gesamte Blechverkleidung 17, 20, 23, 25, 26 dient als Kathode. Die Anodenbatterien werden durch eine Reihe von Stäben 30 gebildet, die nach Art eines Rechens angeordnet sind. Jeder Anodenstab besteht aus stranggepresstem Reinmagnesium mit eingezogener Drahtseele, welche als Träger bis zum vollständigen Abbau des Magnesiums dient. Diese Stäbe 30 hängen von U-profilförmigen Tragschienen 33 herunter, die beidseitig wegen der metallischen Verkleidung des Beckens 1 auf Isolationskörpern gelagert sind, welche elektrisch von den Blechtafeln 23, 25 isolieren. Je eine solche Tragschiene 33 ist zwischen zwei Schikanen 4, 9 bzw. zwischen der eine Einlassöffnung 2 aufweisenden Stirnwand 11 und der ihr benachbarten ersten Schikane 4 angeordnet. Zwischen der letzten Schikane und der die Auslassöffnung aufweisenden Stirnwand ist keine Tragschiene und damit auch keine Anodenbatterie vorgesehen.

Im Becken bildet sich nun zwischen jeder Magnesiumanodenbatterie 30, 33 und der ihr genau gegenüberliegenden Seite der Chromnickelstahlkathoden ein Potential aus, das einen Stromfluss bewirkt. Damit dieser konstant bleibt, bis die Magnesiumschichten 31 auf den Anodendrähten 30 ausgebraucht sind, ist zwischen den Kathoden und Anoden eine Gleichstrom-Niederspannungsquelle 35, nach einem unter dem Namen "Elysator" bekanntgewordenen Verfahren, vorgesehen. Diese Gleichstromquelle sorgt für die Aufrechterhaltung des Potentials und gleicht allfällige Stromschwankungen, die aus verschiedenen Gründen auftreten könne, aus. Zur Verbingung der auf Isolationskörpern 34 lagernden Tragschienen 33 werden die Isolationskörper 34 auf einer Seite des Beckens durch je einen Draht 36 überbrückt, wobei alle diese Drähte zu einer Sammelleitung 37 führen können, die an die Gleichstromquelle 35 angeschlossen ist. Infolge des Potentials wandern Magnesiumionen von der Anode zur Kathode. Der Durchmesser der Anodendrähte 30 nimmt also ständig ab, bis nur noch der blanke Eisenkern 32 vorhanden ist. Dann müssen die Anoden ersetzt werden. Am einfachsten erfolgt dies durch Herausheben der die Anoden haltenden Tragschienen 33, und um dies zu ermöglichen, sind die Isolationskörper 34 an ihrer Oberseite offen, d.h. so ausgbildet, dass die Tragschienen 33 nur eingehängt werden müssen.

Die Aufbereitung des Wassers durch die dargestellte Anlage geht wie folgt vor:

Durch die Potentialdifferenz, welche 850 - 1400 mV beträgt (je nach Material der Kathode), entsteht ein Stromfluss von den Kathodenblechen zu den Anodenstäben. Die im Wasser vorhandenen freien Ionen wandern gegen die Magnesiumanoden, weil Magnesium unedler als der Chromnickelstahl der Kathodenplatten ist. Die Ionen verbinden sich mit dem aus der Anode herausgelösten Magnesiumhydroxid. Durch die langsame Auflösung der Reinmagnesium-Opferanoden 31 wird das Wasser alkalisch. Mittels des Reinmagnesiums werden verschiedene chemische Prozesse ausgelöst und Verbindungen hergestellt. Bei der Reduktion des Magnesiumhydroxides bindet sich die im Wasser vorhandene Kohlensäure, ebenso der zum Teil im Wasser vorhandene gelöste Sauerstoff, so dass dessen korrodierende Wirkung wegfällt. Im Wasser gelöstes Chlor verbindet sich mit dem Magnesium zu Magnesiumchlorid. Ebenso wird Stickstoff mit dem Magnesium zu Magnesiumnitrid umgewandelt und lässt sich in dieser Form absetzen. Phosphat, sowie im Wasser gelöste Schwermetalle gehen mit dem vorhandenen Hydroxid eine chemische Verbindung ein und bilden schwerlösliche Salze, die sich dann in den Rinnen 16 der einzelnen Abschnitte absetzen, wo sie dann wie erwähnt weggespült werden können. Das sich an den Kathoden ansammelnde Magnesium muss von Zeit zu Zeit entfernt werden, was mittels einer mechanischen Reinigung durchführbar ist.

Zur Vereinfachung der Anlage ist es auch möglich, die Schwellen 7 wegzulassen und zwei benachbarte Abschnitte 10, 10' bzw. 10, 10 zu einem einzigen Abschnitt zu vereinigen, der einen zur Ablaufseite hin geneigten Boden aufweist, an dessen tiefster Stelle die Abschlammleitung liegt.

## Patentansprüche

1. Anlage zur kontinuierlichen Aufbereitung oder Nachbehandlung von aggressivem Trink- und Brauchwasser mittels Elektrolyse, mit einem vom Wasser zu durchströmen bestimmten Durchlaufbecken (1), welches über seine Länge mehrere vertikal angeordnete, im wesentlichen über die ganze Breite des Beckens (1) reichende Schikanen (4, 9) aufweist, dadurch gekennzeichnet, dass die Schikanen in abwechselnder Reihenfolge, auf verschiedener Höhe, unterhalb des oberen Randes (5) des Beckens (1) angeordnet sind, wobei die höher gelegenen Schikanen (4) zum Boden (6) des Beckens einen Abstand aufweisen, während die tiefer liegenden Schikanen (9) direkt auf ihm (6) aufliegen, dass gleichviele höher wie tiefer liegende Schikanen (4, 9) vorhanden sind, dass zwischen den Schikanen sowie zwischen der eine Einlassöffnung (2) aufweisenden einen Stirnwand (11) des Beckens und der zunächstliegenden Schikane je eine Magnesium-Anodenbatterie (30, 33) angeordnet ist, und dass die Schikanen (4, 9) die Längswände zwischen ihnen, zwischen der ersten Schikane und der genannten Stirnwand (11) sowie diese Stirnwand eine als Kathode dienende Verkleidung (17, 20, 23, 25, 26) aus einem Metall oder einer Metallegierung aufweisen, die im Wasser eine gegen die Anoden (30) hin abfallende Potentialdifferenz zwischen Kathoden und Anoden ergibt.

2. Anlage nach Anspruch 1, dadurch gekennzeichnet, dass jede höhergelegene Schikane (1) selbsttragend frei mit den Seitenwänden (18, 22) verschraubt ist.

3. Anlage nach Anspruch 2, dadurch gekennzeichnet, dass der Boden (6) zwischen benachbarten Schikanen (4, 9) sowie zwischen der ersten bzw. der letzten Schikane und der dieser benachbarten Stirnwand (11) des Beckens eine, im Längsschnitt des Beckens gesehen, z.B. V-förmige Vertiefung (10, 10') bildet, die an der tiefsten Stelle eine quer zum Becken verlaufende Rinne (16) aufweist.

4. Anlage nach Anspruch 3, dadurch gekennzeichnet, dass die Rinne (16) an ihren Enden an je ein, durch die betreffende Längswand des Beckens hindurchführendes Spülrohr (12, 13) angeschlossen ist.

5. Anlage nach Anspruch 4, dadurch gekennzeichnet, dass die Schikanen (9) auf der Höhe des Abflusses (3) Durchgangsöffnungen (29) mit Drehklappen aufweisen, die ausserhalb des Beckens bedient werden können.

6. Anlage nach Anspruch 1, dadurch gekennzeichnet, dass jede Magnesium-Anodenbatterie aus mehreren, nebeneinander von einer horizontalen Tragschiene (33) herunterhängenden Stäben (30) besteht.

7. Anlage nach Anspruch 6, dadurch gekennzeichnet, dass jede Tragschiene für die Anodenbatterien (33) in zwei, an der Verkleidung (23, 25) der Längswände des Beckens angebrachten elektrisch isolierenden Körpern (34) gelagert ist.

8. Anlage nach Anspruch 7, dadurch gekennzeichnet, dass die Anoden (30) mit den Kathoden (17, 20, 23, 25, 26) über eine die Potentialdifferenz konstanthaltende Gleichstromquelle (35) verbunden sind, wobei bei jeder Anodenbatterie der Isolierkörper (34) durch einen elektrischen Leiter (36) überbrückt ist, der einen Teil dieser Verbindung (36, 37) bildet.

9. Anlage nach Anspruch 1, dadurch gekennzeichnet, dass die Metallegierung der als Kathode dienenden Verkleidung (17, 20, 23, 25, 26) des Beckens (1) Chromnickelstahl ist.

10. Anlage nach Anspruch 1, dadurch gekennzeichnet, dass insgesamt acht Schikanen (4, 9) vorhanden sind.

**Claims**

1. Electrolytic treatment plant for aggressive waters, continuously treating drinking water or water for general use, with a through flow basin (1) for letting the water flow therethrough which is equipped over its length with several baffles (4, 9) disposed vertically and extending substantially over the entire width of the basin (1), characterized in that the baffles are arranged in alternating sequence on different levels below the upper rim (5) of the basin whereby the higher situated baffles (4) are at a distance from the bottom (6) of the basin whereas the lower situated baffles (9) rest directly upon it (6); that there is an equal number of higher and lower baffles; that each a magnesium anode-battery (30, 33) is arranged between the baffles respectively between the front wall (11) of the basin that has an inlet opening (2) and the baffle located next to said wall, and that the baffles, the longitudinal walls between them, between the first baffle and the front wall (11) as well as that front wall have a lining (17, 20, 23, 25, 26) serving as a cathode and made of a metal or a metal alloy, said lining providing for a voltage difference in the water between cathodes and anodes that drops towards the anodes (30).

2. Plant according to Claim 1, characterized in that each higher located baffle (4) is bolted in a self-supporting free manner with the sidewalls (18, 22).

3. Plant according to Claim 2, characterized in that the bottom (6) between neighbouring baffles (4, 9) as well as between the first respectively the last baffle and the respective neighbouring wall (11) of the basin forms a recess (10, 10') which is, when seen in the longitudinal section of the basin, e.g. V-shaped and has on its deepest location a groove (16) running transversely to the basin.

4. Plant according to Claim 3, characterized in that the groove (16) is connected at its ends to each a flush pipe. (12, 13) passing through the respective longitudinal wall of the basin.

5. Plant according to Claim 4, characterized in that the baffles (9) have, on the level of the outlet (3), passage openings (29) with pivoted flaps which can be operated from the outside of the basin.

6. Plant according to Claim 1, characterized in that each magnesium anode-battery consists of several rods (30) suspended side by Side on a horizontal carrier rail (33).

7. Plant according to Claim 6, characterized in that each carrier rail for the anode batteries (33) is supported in two electrically isolating bodies (34) attached to the lining (23, 25) of the longitudinal walls of the basin.

8. Plant according to Claim 7, characterized in that the anodes (30) have a connection to the cathodes (17, 20, 23, 25, 26) by means of a direct current source (35) whereby on each anode battery the insulating body (34) is bridged by an electrical conductor (36) which forms a part of said connection (36, 37).

9. Plant according to Claim 1, characterized in that the metal alloy of the lining (17, 20, 23, 25, 26) of the basin serving as the cathode is chrome-nickel steel.

10. Plant according to Claim 1, characterized in that there are totally eight baffles (4, 9).

**Revendications**

Installation pour le pré- ou le post-traitement électrolytique continu des eaux agressives de boisson ou industrielles, cette installation comportant un bassin de traitement (1) destiné au passage de l'eau et présentant sur sa longueur un ensemble de chicanes (4, 9) disposées verticalement et s'étendant sensiblement sur toute la largeur du bassin (1), et caractérisée en ce que les chicanes sont disposées en alternance à différents niveaux au-dessous du bord supérieur (5) du bassin (1), les chicanes (4) placées le plus haut étant écartées du fond (6) du bassin, tandis que les chicanes placées le plus bas (9) reposent directement sur le fond (6), les chicanes supérieures et inférieures (4, 9) étant en nombre égal, une batterie anodique au magnésium (30, 33) étant disposée entre chaque chicane ainsi qu'entre la paroi frontale (11) du bassin présentant un orifice d'admission (2) et la chicane la plus proche, les chicanes (4, 9), les parois longitudinales situées entre elles, entre la première chicane et ladite paroi frontale (11) ainsi que cette paroi frontale présentent une garniture (17, 20, 23, 25, 26) en métal ou alliage métallique servant de cathode, cette garniture produisant dans l'eau une différence de potentiel entre cathodes et anodes qui décroit à partir des anodes (30).

2. Installation selon la revendication 1, caractérisée en ce que chaque chicane supérieure (4) est vissée par les parois latérales (18, 22), librement et de manière à s'autoporter.

3. Installation selon la revendication 2, caractérisée en ce que le fond (6) forme entre des chicanes voisines (4, 9) ainsi qu'entre la première ou la dernière chicane et la paroi frontale (11) du bassin qui lui est adjacente, selon une coupe longitudinale du bassin, une dépression (10, 10'), par exemple en forme de V, qui présente à l'endroit le plus profond une gouttière (16) s'étendant transversalement au bassin.

4. Installation selon la revendication 3, caractérisée en ce que la gouttière (16) est connectée à chacune de ses extrémités à un tuyau de rinçage (12, 13) passant à travers la paroi longitudinale correspondante du bassin.

5. Installation selon la revendication 4, caractérisée en ce que les chicanes (9) présentent au niveau de la voie d'écoulement (3), des orifices de passage (29) munis de papillons qui peuvent être commandés de l'extérieur du bassin.

6. Installation selon la revendication 1, caractérisée en ce que chaque batterie anodique au magnésium est constituée de plusieurs tiges (30) suspendues les unes à côté des autres à un rail porteur horizontal (33).

7. Installation selon la revendication 6, caractérisée en ce que chaque rail porteur pour les batteries anodiques (33) est logé dans deux corps électriquement isolants (34) appliqués sur la garniture (23, 25) des parois longitudinales du bassin.

8. Installation selon la revendication 7, caractérisée en ce que les anodes (30) sont reliées aux cathodes (17, 20, 23, 25, 26) à travers une source de courant continu (35) maintenant constante la différence de potentiel, le corps isolant (34) de chaque batterie anodique étant shunté par un conducteur électrique (36) qui fait partie de cette liaison (36, 37).

9. Installation selon la revendication 1, caractérisée en ce que l'alliage métallique de la garniture (17, 20, 23, 25, 26) du bassin (1) servant de cathode est un acier au nickel-chrome.

10. Installation selon la revendication 1, caractérisée en ce que les chicanes (4, 9) sont au nombre total de huit.

FIG. 1

FIG. 2

FIG. 3

FIG. 4